# EUROPEAN PATENT SPECIFICATION

(11) **EP 0 457 590 B1**
(45) Date of publication and mention of the grant of the patent: **11.01.1995**
(21) Application number: 91304406.1
(22) Date of filing: 16.05.1991
(51) Int. Cl.: H01S 3/109, H01S 3/139

(54) **Solid state laser oscillator**
Festkörperlaserresonator
Résonateur pour laser à l'état solide

(30) Priority: 16.05.1990 JP 125854/90
(43) Date of publication of application: 21.11.1991
(73) Proprietor: SONY CORPORATION, Tokyo 141 (JP)
(72) Inventor: Oka, Michio, Shinagawa-ku, Tokyo (JP)
(74) Representative: Ayers, Martyn Lewis Stanley

(56) References cited:
- EP-A- 0 331 303
- US-A- 4 025 875
- PATENT ABSTRACTS OF JAPAN vol. 13, no. 413 (E-820) 12 September 1989& JP-A-1152 782
- OPTICS LETTERS. vol. 13, no. 10, October 1988, NEW YORK US, pages 805 - 807; MICHIO OKA et al.: 'Stable intracavity doubling of orthogonal linearly polarized modes in diode-pumped Nd: YAG lasers'
- OPTICS COMMUNICATIONS. vol. 55, no. 3, September 1985, AMSTERDAM NL pages 179 -184; I.D. CARR ET AL.: 'Stabilisation of single-longitudinal mode operation in a Q-switched Nd: YAG laser'

## Description

The present invention generally relates to solid state laser oscillators and, more particularly, is directed to a solid state laser apparatus in which a fundamental wave laser beam produced in a laser medium is resonated so as to pass through a nonlinear optical crystal element within a resonator to thereby produce a type II secondary harmonic laser beam.

In the prior art a solid state laser oscillator is made to emit a laser beam of short wavelength by producing a secondary harmonic laser beam having a frequency twice that of a fundamental wave laser beam produced within a resonator of a solid state laser oscillator. Japanese Utility Model Laid-Open Publication No. 48-93784 describes such a conventional solid state laser oscillator.

In this kind of solid state laser oscillator , the secondary harmonic laser beam is phase-matched with the fundamental wave laser beam within a nonlinear optical crystal element provided in the inside of the resonator which contains a laser medium, whereby the secondary harmonic laser beam can be efficiently produced.

In order to realise the phase-matching, a phase matching condition of the so-called type I or type II must be established between the fundamental wave laser beam and the secondary harmonic laser beam.

Type I phase matching is based on such the principle that one photon having twice the frequency is produced from two photons which are polarized in the same direction by utilizing the ordinary ray of the fundamental wave laser beam as shown by the following equation (1) expressed as:${\text{n}}_{\text{e(2w)}} \text{=} \frac{\text{1}}{\text{2}} {\text{(n}}_{\text{o(w)}} {\text{+ n}}_{\text{o(w)}} \text{)}$

Therefore, if the fundamental wave laser beam is polarised and introduced under a condition such that the polarization direction of the fundamental wave laser beam is matched with the direction of the nonlinear optical crystal element by utilizing a polarizer such as a polarizing beam splitter or the like then, in principle, the phase of the polarized components (the p-wave component and s-wave component, which are referred to as intrinsic polarizations) of the fundamental wave laser beam emitted from the nonlinear optical crystal element can be prevented from being changed. Thus, the generation of the secondary harmonic laser beam can be stably continued by the fundamental wave laser beam which oscillates within the resonator.

In Type II phase matching, on the other hand, two orthogonally polarized intrinsic fundamental wave laser beams are introduced into the nonlinear optical crystal element, whereby the phase matching conditions are established between the two intrinsic polarizations. Therefore, the fundamental wave laser beam is divided into an ordinary ray and extraordinary ray in the interior of the nonlinear optical crystal element, thereby to cause the phase matching in the extraordinary ray of the secondary harmonic laser beam as shown by the following equation (2):${\text{n}}_{\text{e(2w)}} \text{=} \frac{\text{1}}{\text{2}} {\text{(n}}_{\text{e(w)}} {\text{+ n}}_{\text{o(w)}} \text{)}$

In the equations (1) and (2), n_{o(w)} and n_{e(w)} represent the refractive indexes of the fundamental wave laser beams (frequency f = w) relative to the ordinary ray and the extraordinary ray and n_{o(2w)} and n_{e(2w)} represent refractive indexes of the secondary harmonic laser beam (frequency f = 2w) relative to the ordinary ray and the extraordinary ray.

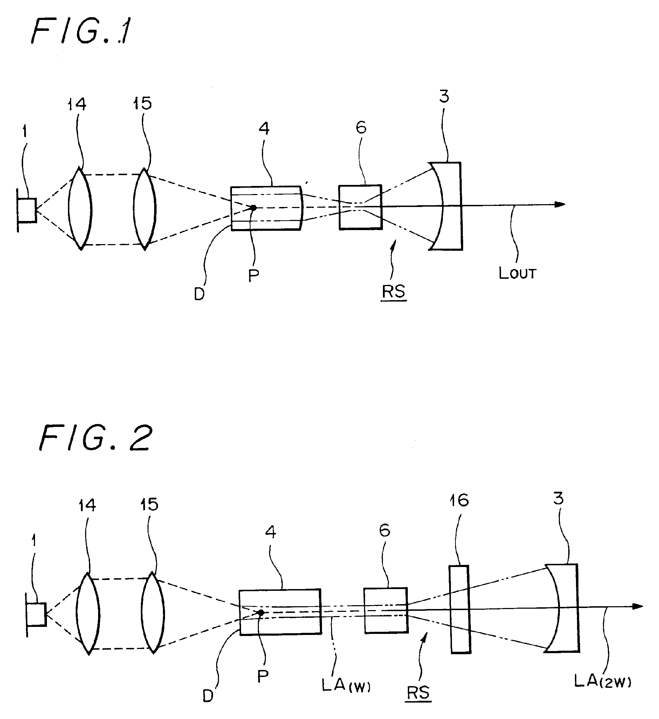

A conventional solid state laser oscillator in which a nonlinear optical element for performing the type II phase matching is provided within the resonator will be described with reference to Figure 1 of the accompanying drawings (see pp. 1175 to 1176 of [Large Amplitude intracavity-doubled Nd:YAG lasers] written by T.Baer and published by Journal of Optical Society of America Inc., Vol.3, No.9/September 1986/J.Opt.Soc.AM.B).

Referring to Figure 1, there is shown a laser diode 1 which emits a laser beam of wavelength of 808 nm at a power of 200 mW. The diverged laser beam from this laser diode 1 is collimated by a collimator lens (convex lens) 14 and converged by an objective lens 15.

A YAG laser rod 4 is provided as the aforenoted laser medium and a dichroic mirror D, treated by the vapour deposition method, is attached to the laser rod 4 at its rear end face opposing the objective lens 15. The dichroic mirror D permits the incident light from the objective lens 15-side to be passed therethrough and reflects the incident light from the opposite side, that is, from the front end side direction of the laser rod 4. One end face of the laser rod 4 is curved so as to have a converging lens effect.

The converged light from the objective lens 15 is introduced into the laser rod 4 (i.e., optical pumping) and focused at a point p so that the laser rod 4 emits infrared light having a wavelength of 1064 nm (this infrared light having the wavelength of 1064 nm will hereinafter be referred to as a fundamental wave light). A nonlinear optical crystal element 6 is made of KTP (KTiOPO₄), in the form of a uniaxial crystal having one optical axis and a cube whose sides are 5mm wide.

The optical crystal element 6 has an incident loss of about 0.5% when the wavelength of incident light is 1064 nm. This optical crystal element 6 permits laser beams having wavelength of 532 nm and 1064 nm to pass therethrough and further matches the phases of the fundamental wave light (1064 nm) and the secondary harmonic laser beam (output light) having the wavelength of 532 nm (type II phase matching). A concave mirror 3 is a dichroic concave mirror which has high reflectivity (99.9%) for a laser beam having a wavelength of 1064 nm and high transmissivity (98%) of a laser beam having a wavelength of 532 nm.

The fundamental wave light from the laser rod 4 is reciprocated between the dichroic mirror D formed at the rear end face of the laser rod 4 and the concave mirror 3 (the length therebetween is 60mm). In accordance with the reciprocation of the fundamental wave light, due to the so-called pull-in phenomenon, the phase of the reciprocated light is established and then amplified (i.e., induced emission) so that the laser beam is oscillated, that is, an oscillation having a wavelength of 1064 nm occurs. The output level of a green laser beam (wavelength 532 nm) of SHG (secondary harmonic generation or ½ multiple wavelength light) having a wavelength of 1064 nm falls in a range of from about 5 to 10 mW.

The fundamental wave light derived from the above laser rod 4 by the optical pumping is vertically introduced into the plane of the nonlinear optical crystal element 6. The incident fundamental wave light is divided into two straight polarized components (ordinary ray and extraordinary ray) which vibrate in directions perpendicular to each other within planes perpendicular to the travelling direction. Accordingly, each time the fundamental wave light derived from the laser rod 4 is reciprocated in the space within the resonator RS and passed through the nonlinear optical crystal element 6, the phases of the orthogonally polarized intrinsic beams (polarized beam formed of extraordinary ray component and polarized beam formed of ordinary ray component) are displaced from each other to cause a coupling so that energy is exchanged between the two polarized beams. As a result, the output levels of the extraordinary ray and of the ordinary ray fluctuate with time producing a noise signal. Accordingly, a stable and strongly resonate state in which a laser beam of 532 nm wavelength is obtained cannot satisfactorily be achieved and the conversion efficiency with which the resonance wave light is converted into a laser beam having a wavelength of 532 nm is relatively low.

As described above, in the example of the prior art of Figure 1, when the secondary harmonic laser beam is generated by using the type II phase matching condition , the phases of the intrinsic polarized beams of the fundamental wave light beam fluctuate each time the fundamental wave laser beam traverses the nonlinear optical crystal element. There is then the risk that the generation of the secondary harmonic laser beam cannot be continued stably.

More specifically, if the phases of the orthogonally polarized intrinsic beams (i.e. the p-wave component and s-wave component) are respectively displaced from each other each time the fundamental wave laser beam generated in the laser medium traverses the nonlinear optical crystal element, then a stationary state in which the fundamental wave laser beams reinforce one another in the respective portions of the resonator cannot be obtained, so that a strongly resonant state, (i.e. a large amplitude standing wave) cannot be achieved. In consequence, the conversion efficiency with which the fundamental wave laser beam is converted into the secondary harmonic laser beam is degraded and there is then the risk that noise will occur in the secondary harmonic laser beam.

Therefore, a solid state laser oscillator (laser light source) is proposed, in which the fundamental wave laser beam is stably resonated within the resonator under the condition that the type II phase matching condition is satisfied. Such a solid state laser oscillator is disclosed in Japanese Patent Laid-Open Publication No. 1-220879.

This conventional solid state laser oscillator will be described with reference to Figure 2. In Figure 2, like parts corresponding to those of Figure 1 are marked with the same references and therefore need not be described in detail.

As shown in Figure 2, this solid state laser oscillator includes a Nd:YAG laser rod (laser medium) 4 which produces the fundamental wave laser light LA_{(w)} by receiving the excitation laser beam emitted from the laser diode 1 to the light incident surface thereof via collimator lens 14 and objective lens 15.

This fundamental wave laser beam LA_{(w)} travels through the nonlinear optical crystal element 6 formed of KTP (KTiOPO₄), for example, a quarter-wave plate formed of a crystal plate and a birefringence element 16, in that order, and is reflected on the reflecting plane of the concave mirror (dichroic mirror) 3. Then, the reflected fundamental wave laser beam is returned through the birefringence element 16, the nonlinear optical crystal element 6 and the laser rod 4 and then reflected on the reflecting plane (dichroic mirror) D of the laser rod 4.

Thus, the fundamental wave laser beam LA_{(w)} is resonated so as to reciprocate in the resonance optical path formed between the reflecting plane (dichroic mirror) D of the laser rod medium 4 and the reflecting plane of the concave mirror 3, thereby constructing the resonator RS between the reflecting plane D and the concave mirror 3.

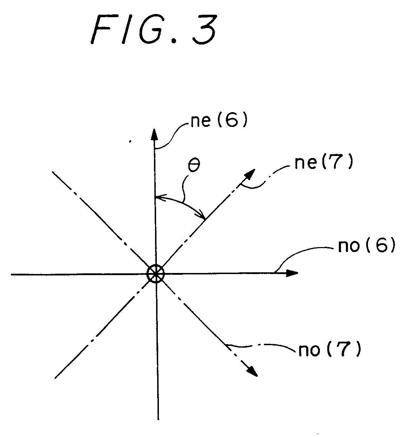

The birefringence element 16 is set at the optical axis position such that the direction of the extraordinary ray direction refractive index nₑ₍₇₎ is inclined by a azimuth angle of ϑ = 45 degrees relative to the direction of the extraordinary ray direction refractive index nₑ₍₆₎ within the plane vertical to the direction of propagation of light as shown in Figure 3.

With the above-mentioned arrangement, when the fundamental wave laser light LA_{(w)} travels through the nonlinear optical crystal element 6 via the resonant optical path, this fundamental wave laser light LA_{(w)} produces the secondary harmonic laser beam LA_{(2w)}. This secondary harmonic laser beam LA_{(2w)} travels through the concave mirror 3 and is transmitted as an output laser beam LA_{OUT}.

Under this condition, respective rays constituting the fundamental laser beam LA_{(w)} travel through the birefringence element 16 located at the position displaced by the azimuth angle of ϑ = 45 degrees relative to the nonlinear optical crystal element 6, which results in the power of the laser beams in the respective portions of the resonator being stabilized at a predetermined level.

Experimental results in the example of the prior art shown in Figure 2 will be described as follows:

More specifically, into the resonator RS in which the Nd:YAG laser rod 4 is excited by the laser diode 1, was inserted a birefringence element 16 formed of a plate having a quarter-wave characteristic relative to the wavelength of the fundamental wave laser beam LA_{(w)} (wavelength is 1.06 µm) of the nonlinear optical crystal element 6 formed of KTP (KTiOPO₄) and the resonator RS.

With this arrangement, under the conditions that the birefringence element 16 is placed at the position of the azimuth angle ϑ = 0 degrees (i.e. the optical axis of the extraordinary ray direction of the birefringence element 16 is made coincident with the optical axis of the extraordinary ray direction of the nonlinear optical crystal element 6) and that the azimuth angle ϑ is rotated by 45 degrees (i.e., ϑ = 45 degrees), an extraordinary ray component E_{e(w)} and an ordinary ray component E_{o(w)} of the fundamental wave laser beam LA_{(w)} and the secondary harmonic laser beam LA_{(2w)} were respectively detected by a photodetector.

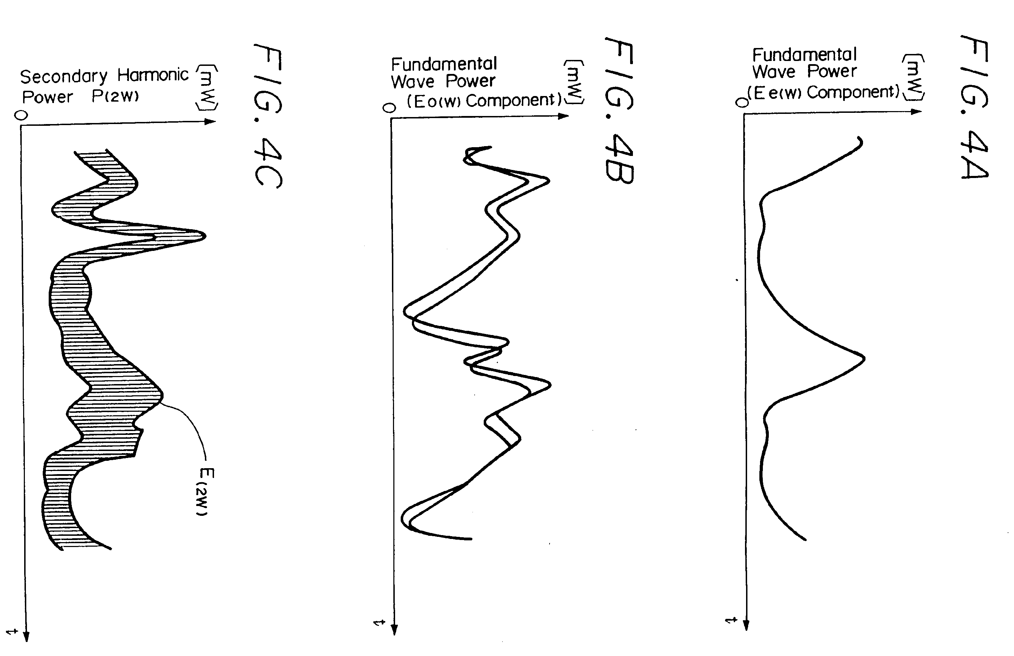

As a result, the extraordinary ray component E_{e(w)} and the ordinary ray component E_{o(w)} of the fundamental wave laser beam LA_{(w)} in the first state where ϑ = 0 degree demonstrated unstable changes with time t as shown in Figures 4A and 4B.

It was understood that the extraordinary ray component E_{e(w)} and the ordinary ray component E_{o(w)} have correlation therebetween because of the occurrence of mode competition.

Further, it was understood from Figure 4C that the output P_{(2w)} of the secondary harmonic laser beam LA_{(2w)} produced in response to the fundamental wave laser beam LA_{(w)} whose power level unstably fluctuates with time t represents unstable fluctuation in which the power level thereof varies over the range from high frequency components to low frequency component.

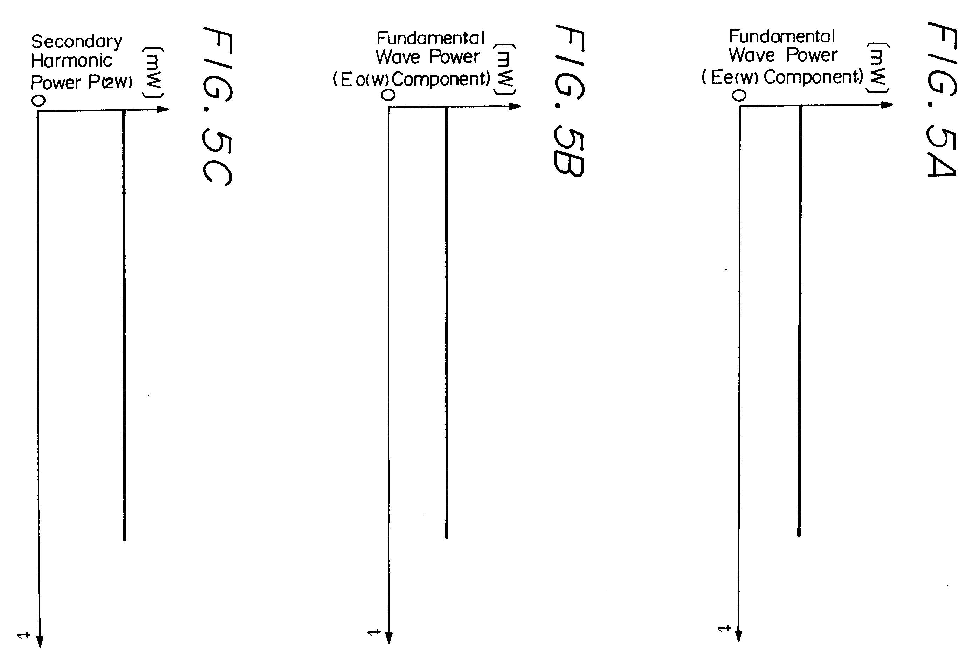

On the other hand, it was understood that, under the second state that the azimuth angle ϑ of the birefringence element 16 is set to ϑ = 45 degrees, the extraordinary ray component E_{e(w)} and the ordinary ray component E_{o(w)} of the fundamental wave laser beam LA_{(w)} are stabilized so as to exhinit substantially constant values with time t as shown in Figure 5A and 5B. Also, it was understood that the output P_{(2w)} of the secondary harmonic laser beam LA_{(2w)} produced by the stabilized fundamental wave laser beam LA_{(w)} is stabilized to a substantially constant value as shown in Figure 5C.

Since the fundamental wave laser beam LA_{(w)} resonating through the resonant optical path is not rectilineally polarized by the polarizing element or the like, the fundamental wave laser beam LA_{(w)} brings the two orthogonally polarized intrinsic beams in the fundamental wave mode, and these two intrinsic polarized beams become random polarized beams which are uncorrelated in phase relation between the two modes.

When the secondary harmonic laser beam LA_{(2w)} is produced within the nonlinear optical crystal element 6 by the fundamental wave laser beam LA_{(w)}, then the output P_{(2w)} is proportional to the product of the extraordinary ray component output P_{e(w)} and the ordinary ray component output P_{o(w)} of the fundamental wave laser beam LA_{(w)} within the nonlinear optical crystal element 6 as expressed by the following equation (3).${\text{P}}_{\text{(2w)}} {\text{∝ d² · P}}_{\text{e(w)}} {\text{· P}}_{\text{o(w)}}$
where d² is a constant of proportionality.

However, when the output P_{(2w)} is expressed by the product of the extraordinary ray component output P_{e(w)}, and the ordinary ray component P_{o(w)} a coupling occurs between the two intrinsic polarizations (i.e. polarizations formed of the extraordinary ray component and of the ordinary ray component) so that the energy is interchanged between the two polarizations.

If the energy is interchanged between the two polarizations, i.e. the extraordinary ray component and the ordinary ray component within the nonlinear optical crystal element 6, the outputs P_{e(w)} and P_{o(w)} of the extraordinary ray component and the ordinary ray component fluctuate with time t, thus resulting in the secondary harmonic output P_{(2w)} generated in the nonlinear optical crystal element 6 being unstable.

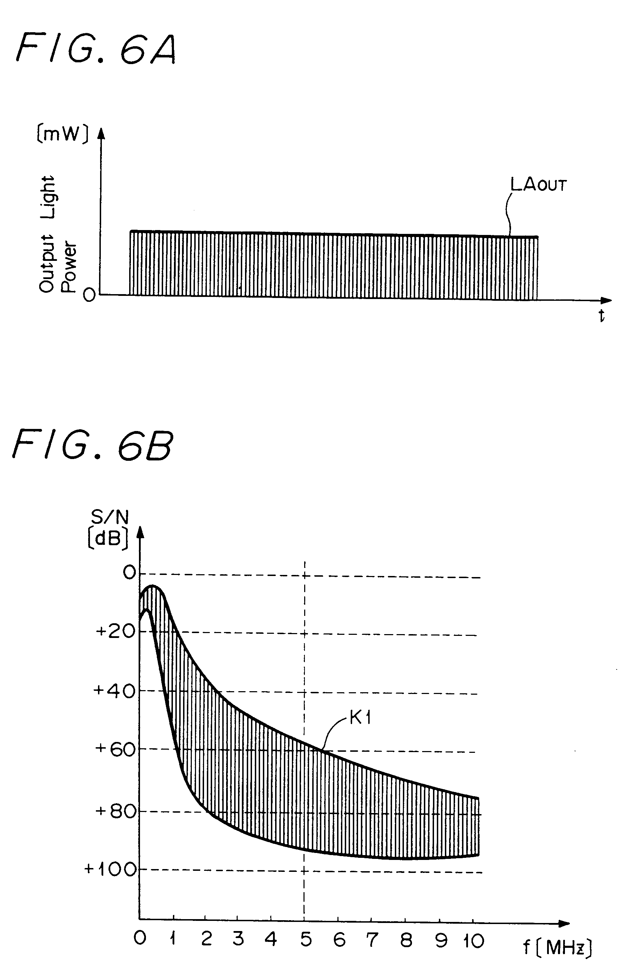

That is, if the azimuth angle ϑ of the birefringence element 16 is selected to be ϑ = 0 degrees, the output laser beam LA_{OUT} contains a noise component of very large energy as shown in Figure 6A, which renders it unsuitable for practical use.

It is to be noted that the noise spectrum of the output laser beam LA_{OUT} produces a signal to noise ratio of about 53 dB when the frequency f is about 5MHz, as shown by curve K1 in Figure 6B.

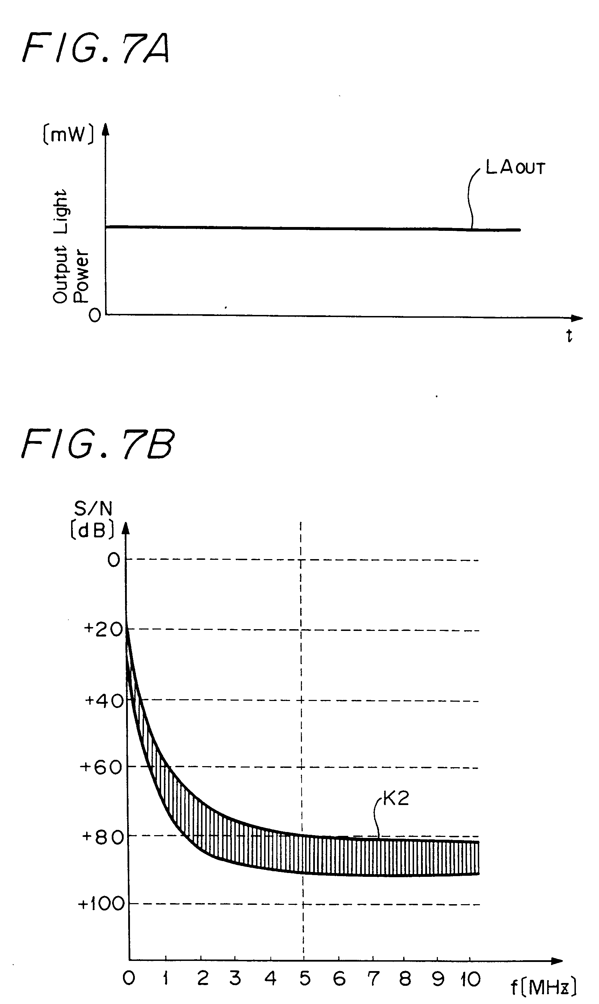

With the azimuth angle ϑ of the birefringence element 16 is set to ϑ = 45 degrees, it was found that the output laser beam LA_{OUT} provided a stabilized signal whose noise component is sufficiently suppressed as shown in Figure 7A. Also, it was found that the signal to noise ratio in the noise spectrum was improved by about 80 dB when the frequency f was 5 MHz as shown by curve K2 in Figure 7B.

It will be clear from the above experimental results that, with the solid state laser apparatus of Figure 2, when the secondary harmonic laser beam LA_{(2w)} is generated within the nonlinear optical crystal element 6 under type II phase matching conditions, using an azimuth angle ϑ of the birefringence element 16 of 45 degrees avoids the coupling phenomenon being produced between two propagations of the fundamental laser beam LA_{(w)} which propagates the resonance optical path of the resonator RS. In consequence, the output laser beam LA_{OUT} formed of the secondary harmonic laser beam LA_{(2w)} can be stabilized.

Therefore, since the two orthogonally polarized intrinsic beams within the resonance optical path of the resonator are in the fundamental wave mode and the fundamental wave laser beam LA_{(w)} of the randomly polarized beam having no correlation with the phase relation between the two modes can be resonated, an extra polarizer is not required, thus simplifying the apparatus.

When the secondary harmonic laser beam LA_{(2w)} is generated within the nonlinear optical crystal element 6 under type II phase matching condition as shown in Figure 2, the resonance operation can be stabilized by inserting the birefringence element 16 into the azimuth angle position with the azimuth angle ϑ of 45 degrees. The reason for this can be understood from a theoretical standpoint as follows:

Within the resonator RS, the following differential equations are established when the above two modes are established:${\text{τ}}_{\text{c}} \frac{\text{dI₁}}{\text{dt}} \text{= (G₁ - α₁ - ε₁I₁ - 2ε₂ I₂)I₁}$${\text{τ}}_{\text{f}} \frac{\text{dG₁}}{\text{dt}} {\text{= - (βI₁ + β}}_{\text{I2}} \text{I₂ + 1)G₁ + G₁⁰}$${\text{τ}}_{\text{c}} \frac{\text{dI₂}}{\text{dt}} \text{= (G₂ - α₂ - ε₁I₂ - 2ε₂I₁)I₂}$${\text{τ}}_{\text{f}} {\text{= - (βI₂ + β₂₁I₁ + 1)G₂ + G₂}}^{\text{o}}$
where τ_{c} is the reciprocating time of the resonator, τ_{f} is the fluorescent life, α₁ and α₂ the loss coefficients in the two modes, respectively, ε₁ is the loss coefficient caused by the occurrence of the secondary harmonic component in each mode, ε₂ is the loss coefficient caused by the occurrence of sum frequency between the two modes, β is the saturation parameter, G₁^{o} and G₂^{o} are the small signal gains in the two modes, respectively, I₁ and I₂, the light intensities in the two modes, respectively, G₁ and G₂ are the gains in the two modes, respectively and β₁₂ and β₂₁ are the cross-saturation parameters in the two modes, respectively.

In connection with the above rate equations, a paper has pointed out that the resonating operation of the resonator becomes unstable because of the coupling in the multilongitudinal modes. The differential equation with respect to the coupling between the multilongitudinal modes is described in PP. 1175 to 1180 of "Large Amplitude fluctuations due to longitudinal mode coupling in diode-pumped intracavity-doubled Nd:YAG lasers" written by T.Baer and published by Journal of Optical Society of America Vol. 3, No. 9/September 1986/J.Opt.Soc.Am.B.

The rate equation on that paper can be similarly be applied to the two intrinsic polarization modes so that the equations (4) to (7) can be established with respect to the two intrinsic polarization modes.

Of the equations (4) to (7), the equations (4) and (6) involve a multiplying term (- 2ε₂I₁I₂) which involves the light intensities I₁ and I₂ of the two intrinsic polarization modes, whereby the light intensities of the two intrinsic polarization modes in the inside of the resonator are coupled with each other. The equations (4) and (6) produce the result that when the light intensity I₁ (or I₂) is fluctuated, the light intensity I₂ (or I₁) also fluctuates.

However, the coefficient ε₂ in the multiplying term of - 2ε₂I₁I₂ satisfies ε₂ = 0 when the azimuth angle ϑ is selected to be ϑ = 45 degrees. Whereas, when the azimuth angle ϑ is selected to be ϑ ≠ 45 degrees, the coefficient ε₂ takes values other than 0, which can be proved as follows. Under this condition, the multiplying term of - 2ε₂I₁I₂ can be eliminated from the equations (4) and (6) so that the resonating operations expressed by the equations (4) and (6) can be stabilized.

Initially, let us consider that ϑ = 0 degrees is selected as one example of the general conditions where the azimuth angle ϑ is selected so as to satisfy ϑ ≠ 45 degrees

Electric field vectors E1 and E2 of two intrinsic polarization of beams incident on the nonlinear optical crystal element 6 at that time are incident on the nonlinear optical crystal element 6 under a condition such that they become coincident with the ordinary ray o and the extraordinary ray e of the nonlinear optical crystal element 6. Accordingly, expressing the incident electric field vectors E₁ and E₂ by Jones vectors where the ordinary ray axis 0 of the nonlinear optical crystal element 6 is taken as the x axis and the extraordinary ray axis e is taken as y axis yields the following equations (8) and (9): 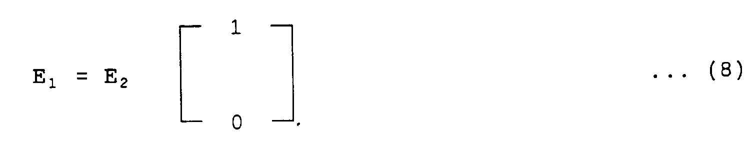 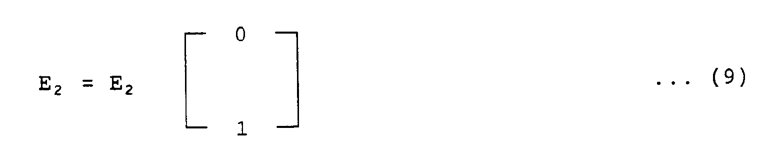
where the Jones vectors are expressed only by coefficients omitting the phase term.

Thus, the time-averaged va̅l̅u̅e̅ p_{(w)} of the fundamental wave laser beam LA_{(w)} within the resonator CAV can be expressed as the sum of square of magnitudes E₁ and E₂ of the electric fields by the following equation (10):$\overline{{\text{P}}_{\text{(w)}}} \text{=} \overline{\text{(E₁ + E₂) (E₁ + E₂)*}} \text{=} \overline{\text{(E₁E₁* + E₂E₂* + E₂E₁*}} \text{= |E₁|² + |E₂|²} \text{= P₁ + P₂}$
where (E₁ + E₂)* and E₁ + and E₂* represent conjugated vectors of (E1 + E₂), E₁ and E₂, respectively.

In equation (10), when terms which are multiplied with each other have values having strong correlation, or in the case of E₁ and E₂, time average values E̅₁̅* and E̅₂̅* are expressed by the following equations (11) and (12):$\overline{\text{E₁E₁*}} \text{= |E₁|² ≡ P₁}$$\overline{\text{E₂E₂*}} \text{= |E₂|² ≡ P₂}$
Whereas, in the case of E₁E₂* and E₂E₁*, the electric fields E₁ and E₂ expressed by the multiplying terms are, respectively, electric field components of the two intrinsic orthogonally polarized modes. Random polarization having no correlation of the phase relation between the two modes, eliminates the correlation therebetween and in consequence, the time values become 0 as expressed by the following equations (13) and (14):$\overline{\text{E₁E₂*}} \text{= 0}$$\overline{\text{E₂E₁*}} \text{= 0}$

The electric field E_{(2w)} of the secondary harmonic laser beam LA_{(2w)} can be expressed, in the case of the type II phase matching, by the following equation (15):${\text{E}}_{\text{(2w)}} \text{= dE₁E₂}$
where d is the nonlinear conversion efficiency of the nonlinear optical crystal element 6.

The time average value P̅_̅{̅(̅2̅w̅)̅}̅ of the power of the secondary harmonic laser beam LA_{(2w)} can be expressed by the product of powers of the two intrinsic polarizations:$\overline{{\text{P}}_{\text{(2w)}}} \text{=} \overline{\text{(dE₁E₂) (dE₁*E₂*)}} \text{=} \overline{\text{(d₂ (E₁E₁*) (E₂E₂*)}} \text{= d₂ |E₁|² |E₂|²} \text{= d₂ P₁ P₂}$
Also in this case, the relationship expressed by the equations (11) to (14) can be established.

Therefore, when the azimuth angle ϑ is selected to be zero degrees, the power of the resonator becomes the sum of the power P₁ + P₂ of the fundamental wave laser beam LA_{(w)} expressed with respect to the equation (10) and the power d₂P₁P₂ of the secondary harmonic laser beam LA_{(2w)} expressed by the equation (16).

Comparing this relationship with the equations (4) and (6), it is to be noted that the light intensities I₁ and I₂ in the equations (4) and (6) have the same meaning as those of the powers P₁ and P₂ in the equations (10) and (16) and that the equation (4) includes the term [i.e. (G₁ - α₁)I₁] of the light intensity I₁, the term (i.e. - εI₁2) of I₁² and the multiplying term (i.e. - 2ε₂I₁I₂) of I₁ and I₂ and the equation (6) includes the term (i.e.ε₁I₂²) of I₂ and the multiplying term (i.e. - 2ε₂I₁I₂) of I₁I₂.

Accordingly, it is to be understood that, when ε₁ is selected to be zero (ε₁ = 0) in the equation (4) and (6), the sum of the equations (4) and (6) has the same term as the sum of the equations (10) and (16).

Thus, when the azimuth angle ϑ of the birefringence element 16 is selected to be zero (ϑ = 0 degrees), this setting is equivalent to the fact that the constant ε₁ is set to zero (ε₁ = 0) in the general equations of the equations (4) and (6). However, when the azimuth angle ϑ is selected to be 0 degrees (ϑ = 0), the multiplying term - 2ε₂I₁I₂ of the light intensities I₁ and I₂ of the two fundamental wave modes cannot be eliminated because ε₂ ≠ 0. Accordingly, when the azimuth angle ϑis selected to be zero (ϑ = 0), the resonant operation of the resonator expressed equations (4) and (6) cannot be stabilized.

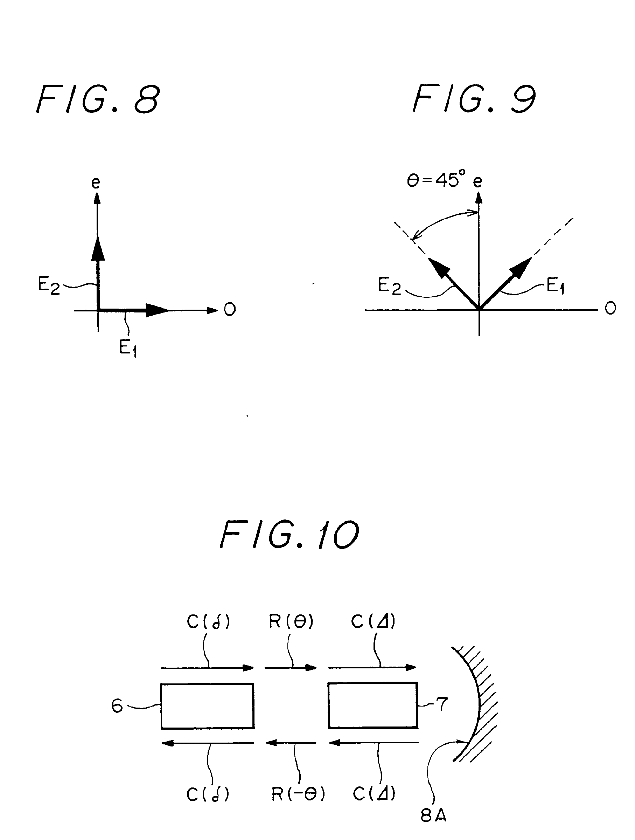

In the solid state laser resonator shown in Figure 2, when the azimuth angle ϑ of the birefringence element 16 is selected to be 45 degrees (ϑ = 45), this means that, as shown in Figure 9, the intrinsic polarizations E₁ and E₂ of the fundamental wave laser beam LA_{(w)} within the resonator are set to the azimuth angle positions which are rotated relative to the ordinary ray axis o and the extraordinary ray axis e of the nonlinear optical crystal element 6. This can be derived from equation (17) for the reasons indicated below.

As a result, the intrinsic vectors E1 and E2 can be expressed by the following Jones vectors:

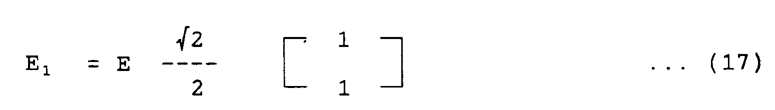

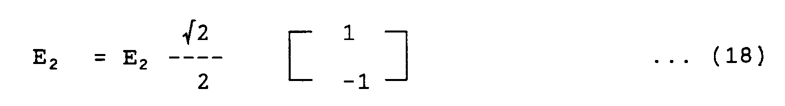

Accordingly, the time average value P̅_̅{̅(̅w̅)̅}̅ of the power P_{(w)} of the fundamental wave laser beam LA_{(w)} of the resonator CAV can be expressed similarly to the equations (10 to (14) as follows:$\overline{{\text{P}}_{\text{(w)}}} \text{=} \overline{\text{(E₁ + E₂)(E₁ + E₂)*}} \text{=} \overline{\text{E₁E₁ * + E₂E₂* + E₁E₂* + E₂E₁}} \text{= |E₁|² + |E₂|²} \text{= P₁ + P₂}$

The electric field E_{(2w)} of the secondary harmonic laser beam LA_{(2w)} generated under the type II phase matching condition, on the other hand, can be expressed by the following equation (20) with reference to the components of the ordinary ray axis o and the extraordinary ray axis e:${\text{E}}_{\text{(2w)}} \text{= d} \frac{\text{√2}}{\text{2}} \text{(E₁ + E₂) ·} \frac{\text{√2}}{\text{2}} \text{(E₁ - E₂)} \text{=} \frac{\text{1}}{\text{2}} \text{d (E₁² + E₂²)}$

From the equation (20), the time average value P̅₍̅₂̅w̅₎̅ of the of the secondary harmonic laser beam LA_{(2w)} can be expressed as follows:$\overline{{\text{P}}_{\text{(2w)}}} \text{=} \frac{\text{1}}{\text{4}} \text{d²} \overline{\text{(E₁² - E₂²)(E₁² + E₂²)*}} \text{=} \frac{\text{1}}{\text{4}} \text{d²} \overline{{\text{(E₁²E₁}}^{\text{.2}} {\text{+ E₂E₂}}^{\text{·2}} {\text{- E₁²E₂}}^{\text{·2}} {\text{- E₂²E₁}}^{\text{·2}} \text{)}} \text{=} \frac{\text{1}}{\text{4}} \text{d² (|E₁|⁴ + |E₂|⁴)}$
where the following equations are established:$\overline{{\text{E₁²E₁}}^{\text{·2}}} \text{= |E₁|⁴ ≡ P₁²}$$\overline{{\text{E₂²E₂}}^{\text{·2}}} \text{= |E₂|⁴ ≡ P₂²}$$\overline{{\text{E₁²E₂}}^{\text{·2}}} \text{= 0}$$\overline{{\text{E₂²E₁}}^{\text{·2}}} \text{= 0}$

In this connection, since the terms of E₁²E₁*² and E̅₂̅E̅₂̅*̅²̅ of the equation (21) have the expressions in which E1, E₁* and E₂, E₂* each having strong correlation are multiplied, the resultant time average value does not become zero but becomes equal to the square of the powers P₁ and P₂.

Whereas, since the electric fields E₁, E₂* and E₂ and E₁*² are respective electric field components of the two orthogonally intrinsic polarization modes and are also random polarizations which are not correlated with the phase relationship between the two modes, these electric fields are not correlated with each other, so that the time average values of the terms E₁²E₂*² and E₂²E₁*² tend to zero.

Having compared the sum of the time average value P̅_̅{̅(̅w̅)̅}̅ (the equation (19)) of the power P_{(w)} of the fundamental wave laser beam LA_{(w)} produced when the azimuth angle ϑ of the birefringence element 16 is selected to be 45 degrees (ϑ = 45°) and the time average value P̅_̅{̅(̅2̅w̅)̅}̅ (the equation (21) of the power P_{(2w)} of the secondary harmonic laser beam LA_{(2w)} with the sum of the equations (4) and (6), it is to be noted that , when the coefficient ε₂ of the multiplying terms of the light intensities I₁ and I₂ is selected to be zero (ε₂ = 0) in the equations (4) and (6), the respective terms of the sum of the equations (19) and (20) correspond with the respective terms of the sum of the equations (4) and (6) in a one-to-one relation.

This means that the fact that the azimuth angle ϑ of the birefringence element 16 shown in Figure 2 is selected to be 45 degrees (ϑ = 45°) is equivalent to the coefficient ε₂ being selected to be zero (ε₂ = 0) in the equations (4) and (6) treated as general equations. If the above-mentioned conditions are set, then it will be possible to obtain the resonant condition expressed by the rate equation which avoids the term involving the product of the respective light intensities I₁ and I₂ of the two fundamental wave modes in the equation (4) and (6), thereby inhibiting the energy from being interchanged through the occurrence of the secondary harmonic laser beam between the light intensities I₁ and I₂ of the two fundamental wave modes. Therefore, the secondary harmonic laser beam LA_{(2w)} can be stabilized in accordance with the fundamental wave laser beam LA_{(w)}.

The above conditions can be established if the birefringence element 16 in which the azimuth angle ϑ is selected to be 45 degrees (ϑ = 45°) and the phase amount Δ is selected to be 90 degrees (Δ = 90°).

That is, as shown in Figure 10, if the phase is caused to deviate by a phase amount δ by the birefringence element when the fundamental wave laser beam LA_{(w)} passes the nonlinear optical crystal element 6, then the corresponding polarization state will be expressed by a Jones matrix C(δ) as in the following equation (26):

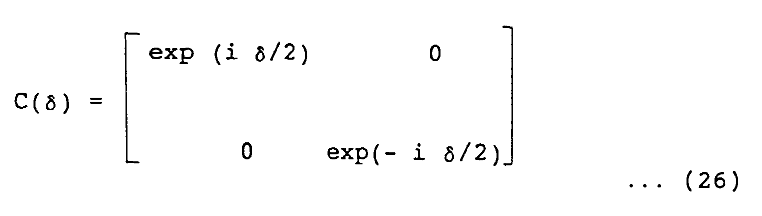

Further, since the birefringence element 16 is rotated by the azimuth angle ϑ, the polarization state of the fundamental wave laser beam LA_{(w)} can be expressed by the Jones matrix R(ϑ) as in the following equation (27):

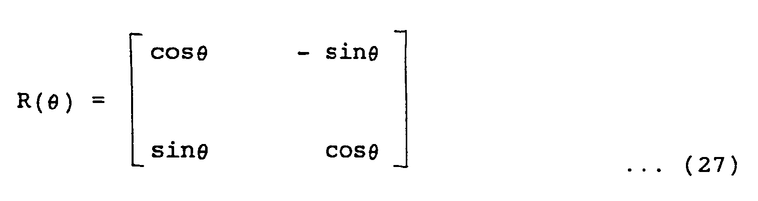

Further, the polarization state in which the fundamental laser beam LA_{(w)} is optically rotated by the phase amount by the birefringence element 16 can be expressed by the Jones matrix C( ) as in the following equation (28):

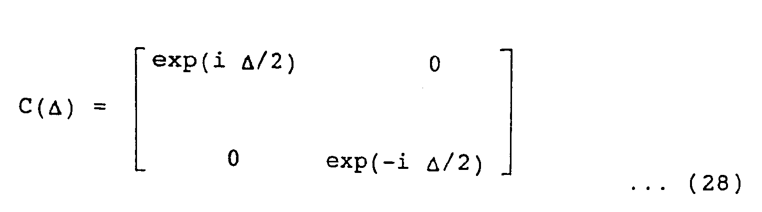

Therefore, the change of the polarization state in which the fundamental wave laser beam LA_{(w)} emitted from the laser rod 4 travel sequentially through the nonlinear optical crystal element 6 and birefringence element 16 and introduced into the incident surface of the concave mirror 3 and reflected by the incident surface to return through the birefringence element 16 and the nonlinear optical crystal element 6 to the laser rod 4 side can be expressed by the Jones matrix M as in the following equation (29);$\text{M = C(δ)R(ϑ)C(Δ)C(Δ)R(-ϑ)C(δ)}$

Substituting the equations (26) to (28) into the equation (29) yields the following Jones matrix M which expresses the polarization state of the optical system:

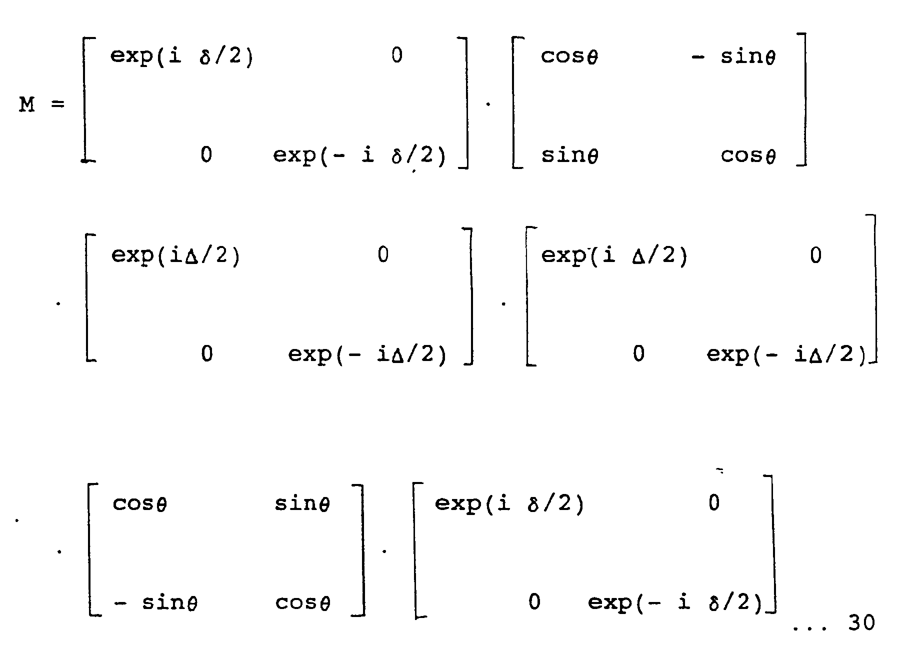

Operating the oscillator under the condition such that Jones matrix of the second to fifth terms on the right side of the equation (29) is taken as matrix M1, we have: 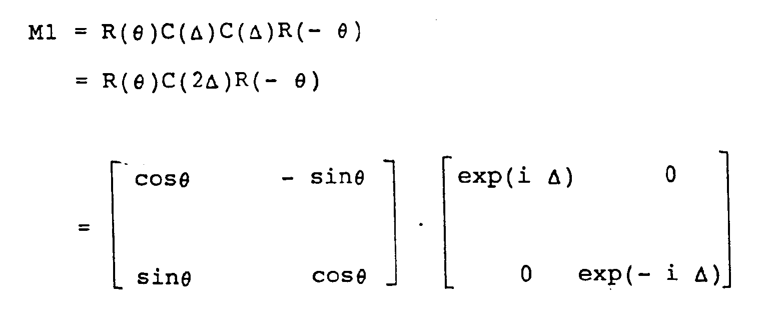 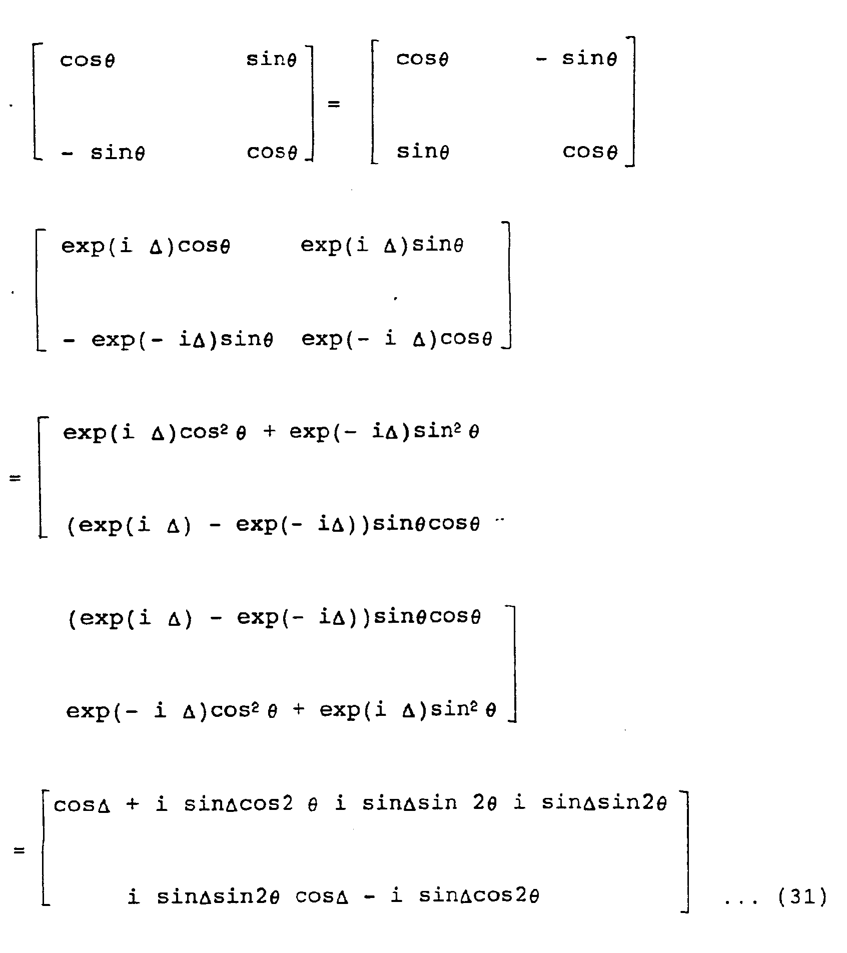
Substituting the calculated result into the equation (29), we have: 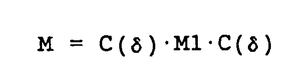 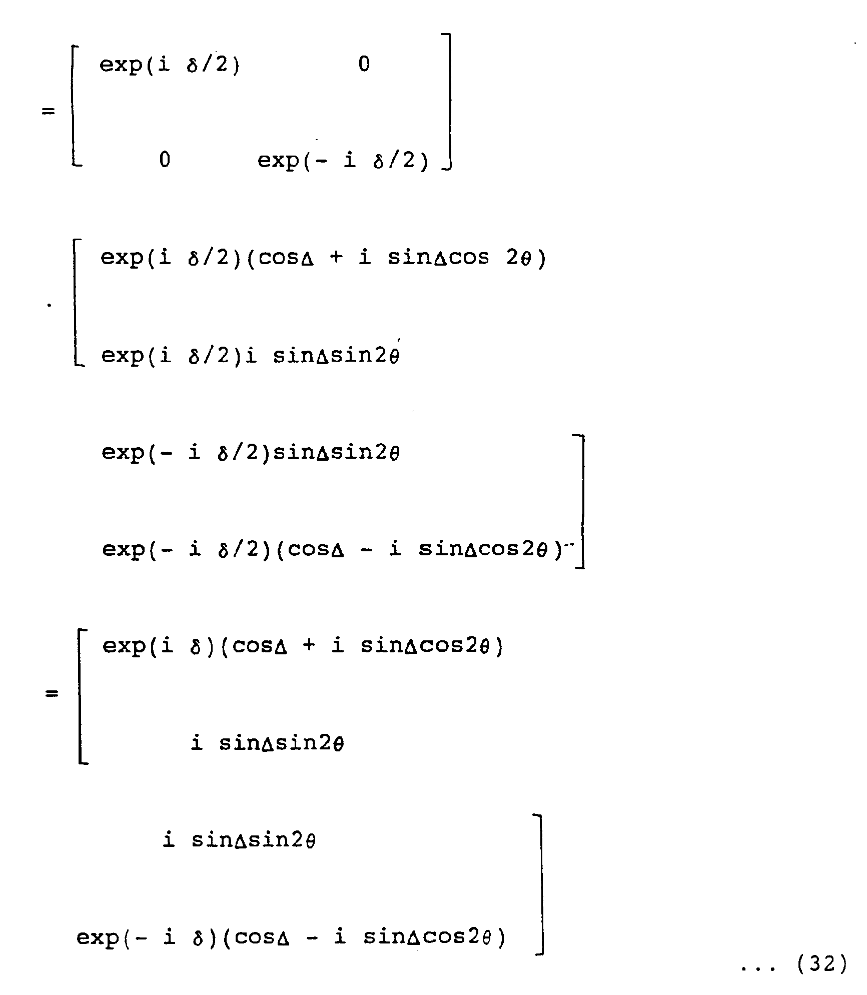
Then, the matrix M expressing the polarized state is: 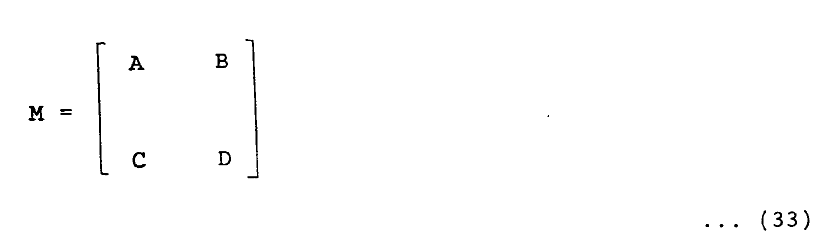
and an intrinsic value λ relative to the intrinsic vector X is calculated:$\text{MX = λX}$
The intrinsic value λ which satisfies the equation (34) should satisfy the following determinant (35): 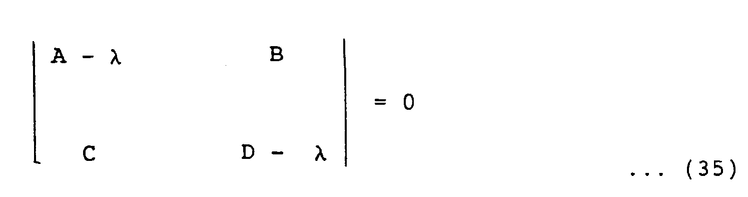
From this determinant (35), we have:$\text{(A - λ )(D - λ ) - BC = 0}$$\text{λ₂ - (A + D)λ + AD - BC = 0}$
Accordingly, it is to be understood that the quadratic equation with respect to λ may be solved. Solutions of the equation (37) are:$\text{λ =} \frac{\text{(A+D) ±} \sqrt{\text{(A+D)²-4(AD-BC)}}}{\text{2}}$

From the equations (32) and (33), A + D can be expressed as:$\text{A + D = exp(i δ)(cosΔ + i sinΔcos2ϑ)} \text{+ exp(- i δ) (cosΔ - i sinΔcos2ϑ)} \text{= 2cosδcosΔ + i sinΔcos2ϑ(2i sinδ)} \text{= 2 (cosδcosΔ - sinδsinΔcos2ϑ)}$
Further, AD-BC can be expressed as in the following equation (40):$\text{AD - BC = cos² Δ + sin² Δcos² 2ϑ + sin² Δsin² 2ϑ} \text{= 1}$
Accordingly, substituting the equations (39) and (40) into the equation (38), we have the intrinsic value which is expressed as:$\text{λ = - (cosδcosΔ - sinδsinΔcos2ϑ)} \text{±} \sqrt{\text{cosδcosΔ - sinδsinΔcos2ϑ)² - 1}}$

Therefore, if the x component of the intrinsic vector X is set to 1 (x = 1), the intrinsic vector X can be expressed as: 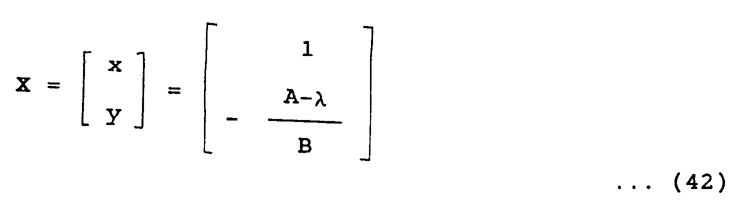
Incidentally, in the solid state laser apparatus shown in Figure 2, the azimuth angle of ϑ of the birefringence element 16 is selected to be 45 degrees (ϑ= 45°) and the phase angle Δ of the birefringence element 16 is selected to be 90 degrees (Δ = 90°). Accordingly, putting$\text{ϑ = 45°}$$\text{Δ = 90°}$
into the equations (32) and (33) yields the following matrix M: 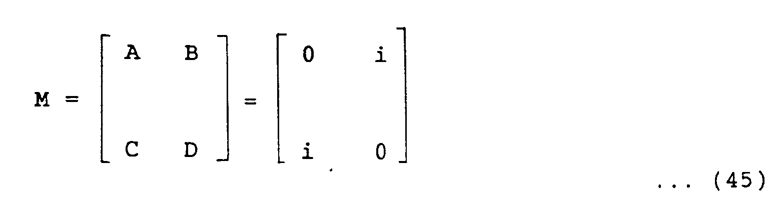
Also, the equation (41) yields the intrinsic value expressed as:$\text{λ = ± i}$

Consequently, the intrinsic vector X can be obtained as:

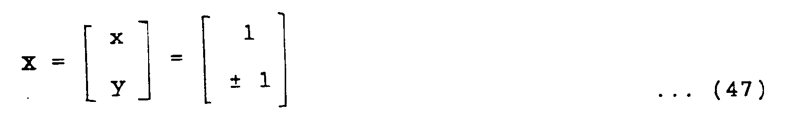

It is clear from the above-mentioned results that, if the azimuth angle ϑ is selected to be 45 degrees (ϑ= 45°) and the phase amount Δ is selected to be 90 degrees (Δ = 90°) with respect to the equations (43) and (44) as described above then, when the intrinsic polarized vectors E₁ and E₂ of the fundamental wave laser beam LA_{(w)} within the resonator CAV becomes incident on the nonlinear optical crystal element 6 from the laser medium 2 side, the intrinsic polarized vectors E₁ and E₂ are set at the azimuth angle positions which are rotated by 45 degrees relative to the ordinary ray axis o and the extraordinary ray axis e of the nonlinear optical crystal element 6.

As a result of the consideration from a theoretical standpoint, it is to be noted that the azimuth angle ϑ of the birefringence element 16 is selected to be 45 degrees (ϑ = 45°), whereby the secondary harmonic laser beam LA_{(2w)} can be stabilized in accordance with the fundamental wave laser beam LA_{(w)} of the resonator CAV.

According to the conventional solid state laser apparatus shown in figure 2, the fundamental wave laser beam generated in the laser medium (laser rod 4) is resonated so as to pass through the nonlinear optical crystal element 6 provided within the resonator RS, thereby generating the type II secondary harmonic laser beam. Also, since the optical means for suppressing the coupling produced due to the occurrence of the sum frequency between the two polarization modes of the fundamental wave laser beam , that is, the birefringence element (quarter-wave plate) 16 is provided within the resonator RS, the coupling produced due to the occurrence of the sum frequency between the two polarization modes of the fundamental laser beam can be suppressed, thus resulting in the oscillation being stabilized.

According to the prior art solid state laser apparatus as described above, however, if the multilongitudinal mode exists within the same polarization mode of the fundamental laser beam, there is then the risk that mode hopping noise will occur due to the mode coupling within the same polarization mode.

Accordingly, it is an object of the present invention to provide an improved solid state laser apparatus in which the aforenoted shortcomings and disadvantages encountered with the prior art can be reduced or eliminated.

More specifically, it is an object of the present invention to provide a solid state laser apparatus in which a mode hopping noise can be avoided.

It is another object of the present invention to provide a solid state laser apparatus in which oscillation can be stabilized.

According to the present invention there is provided a solid state laser apparatus in which, in use, a fundamental laser beam generated in a laser medium is resonated in a resonator so as to travel through a nonlinear optical crystal element provided within said resonator thereby to generate a secondary harmonic laser light and in which first optical means for suppressing a coupling caused by a sum-frequency generation between two polarization modes of said fundamental wave laser beam is provided within said resonator, comprising:
second optical means provided within said resonator for causing said two polarization modes of said fundamental wave laser beam to respectively oscillate in a single longitudinal mode; and
control means for controlling the effective resonator length of said resonator such that said two polarization modes of said fundamental wave laser beam become the same in oscillation intensity.

The invention and examples which are useful for the understanding of the invention will be further described by way of non-limitative example with reference to the accompanying drawings, in which:-
Figures 1 and 2 are schematic diagrams showing, respectively arrangements of solid state laser apparatus according to the prior art;
Figure 3 is a schematic diagram used to explain an azimuth angle of a birefringence element used in the conventional solid state laser apparatus of Figure 2;
Figures 4A-4C, Figures 5A-5C, Figures 6A, 6B and Figures 7A, 7B are respectively graphs graphing experimental results of the conventional solid state laser apparatus;
Figures 8 and 9 are schematic diagrams, respectively, showing intrinsic polarization states when the azimuth angles ϑ are selected to be 0 degree and 45 degrees;
Figure 10 is a schematic diagram used to explain the polarization state of a fundamental wave laser beam within a resonator;
Figure 11 is a schematic diagram showing the overall arrangement of an example which is useful for the understanding of a solid state laser apparatus according to the present invention;
Figure 12 is a schematic diagram showing an arrangement of a resonator length control apparatus used in the present invention;
Figures 13A and 13B are diagrams used to explain an optical path length of a resonator, respectively;
Figure 14 is a schematic diagram showing a part of an embodiment of the solid state laser apparatus according to the present invention;
Figure 15 is a schematic representation showing the relation between a gain and p-mode and s-mode;
Figure 16 is a schematic diagram used to explain the hole-burning effect;
Figure 17 is a cross-sectional view illustrating a structure of an etalon;
Figures 18 and 19 are schematic diagrams, respectively, used to explain the etalon of Figure 17;
Figure 20 is a schematic diagram used to explain a resonator whose resonator length is short;
Figure 21 is a schematic diagram used to explain how to reduce the hole-burning effect;
Figure 22 is a schematic diagram used to explain single mode oscillation;
Figures 23 and 24 are diagrammatic views of section, respectively, showing nonlinear optical crystal elements having wedges; and
Figure 25 is a schematic diagram showing a part of another example which is useful for the understanding of the solid state laser apparatus according to the present invention.

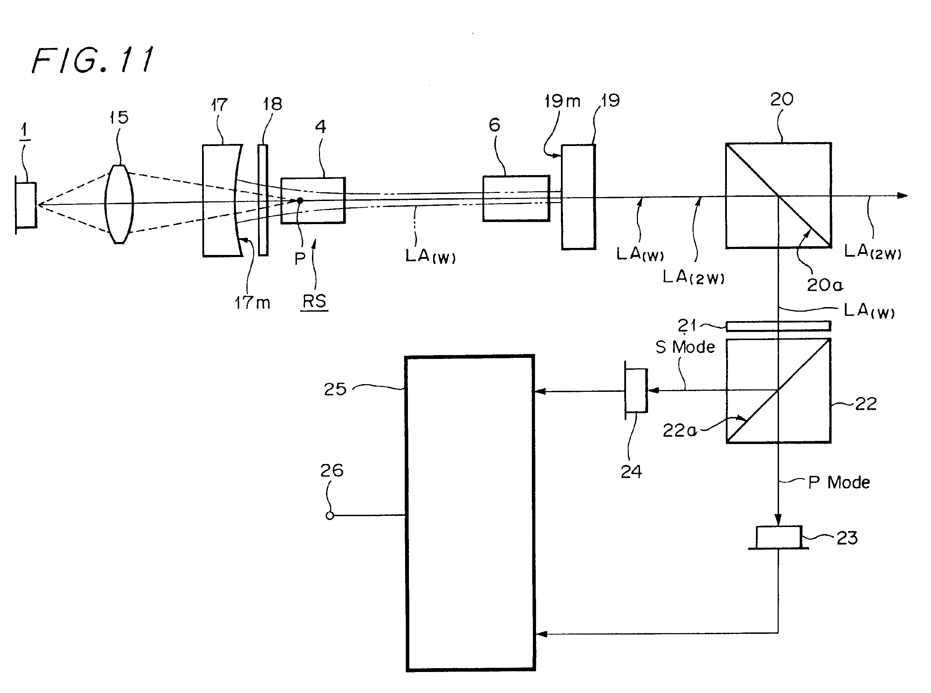

Referring to the drawings in detail, and initially to Figure 11, an example which is useful for the understanding of the solid state laser apparatus according to the present invention will be described. The solid state laser apparatus of this example is designed so as to generate a secondary harmonic laser beam having a frequency twice that of a fundamental wave laser beam generated within a resonator to thereby establish the type II phase matching condition between the fundamental laser beam and the secondary harmonic laser beam.

Figure 11 shows a resonator RS composed of a concave mirror (dichroic mirror) 17, quarter-wave plate (birefringence element ) 18 formed of crystal or the like, a laser rod (formed of Nd:YAG laser) 4 provided as a laser medium, a nonlinear optical crystal element [KTP (KTiOP₄) (formed of uniaxial crystal having a single optical axis)] 6 and a plane mirror (dichroic mirror) 19.

An excitation laser beam having a wavelength of 808 nm and a power of 200 mW is emitted from a laser diode 1, converged by an objective lens 15 and is introduced through the concave mirror 17 and the quarter-wave plate 18 into the laser rod 4 such that it is focused on a point P within the laser rod 4. Thus, the laser rod 4 generates a fundamental wave laser beam (infrared ray) having a wavelength of 1064 nm.

The quarter-wave plate 18 is located on the optical axis at a position such that, within the plane vertical to the light beam propagation direction, the direction of refractive index of the extraordinary ray direction thereof is inclined by the azimuth angle of 45 degrees relative to the direction of the refractive index of the extraordinary ray direction of the nonlinear optical crystal element 6.

The concave mirror 17 has high transmissivity of a laser beam having a wavelength of 808 nm and high reflectivity of laser beams having wavelengths of 1064 nm and 532 nm.

The plane mirror 19, on the other hand, has high reflectivity of a laser beam having a wavelength of 1064 nm and high transmissivity of a laser beam having a wavelength of 532 nm.

The optical crystal element 6 permits the laser beams having the wavelengths of 1064 nm and 532 nm to pass therethrough and also matches the phase of the fundamental wave laser beam having the wavelength of 1064 nm and the phase of the secondary harmonic laser beam thereof, that is the laser beam having the wavelength of 532 nm.

The fundamental laser beam LA_{(w)} from the laser rod 4 travels through the nonlinear optical crystal element 6 and becomes incident on a mirror plane 19m of the plane mirror 19, in which it is reflected and introduced into a mirror plane 17m of the concave mirror 17 through the nonlinear optical crystal element 6, the laser rod 4 and the quarter-wave plate 18. Then, this fundamental laser beam LA_{(w)} incident on the mirror plane 17m of the concave mirror 17 is thereby reflected and introduced through the quarter-wave plate 18, the laser rod 4 and the nonlinear optical crystal element 6 into the mirror plane 19m of the plane mirror 19, in which it is reflected. The above operations are repeated to thereby cause the oscillation. When the fundamental wave laser beam LA_{(w)} passes the nonlinear optical crystal element 6, a secondary harmonic laser beam (green laser beam) LA_{(2w)} is generated, passed through the plane mirror 19 and output from the resonator RS. Incidentally, the fundamental wave laser beam LA_{(w)} is formed of p-mode component and s-mode component whose polarization directions are different from each other by 90 degrees. One portion of the fundamental wave laser beam is outputted to the outside of the resonator RS from the plane mirror 19.

The fundamental wave laser beam LA_{(w)} and the secondary harmonic laser beam LA_{(2w)} from the plane mirror 19 become incident on a beam splitter 20, in which the secondary harmonic laser beam LA_{(2w)} is not affected and passed therethrough but the fundamental wave laser beam LA_{(w)} is reflected on a reflection plane 20a of the beam splitter 20 so that the optical path thereof is polarized by 90 degrees. Thereafter, the resultant fundamental wave laser beam LA_{( w)} is introduced into a polarizing beam splitter 22 via a half-wave plate 21.

Since the p-mode component and the s-mode component of the fundamental wave laser beam LA_{(w)} outputted from the plane mirror 19 are oriented in the direction inclined by ± 45 degrees relative to the surface of the sheet of drawing, the polarization direction of the fundamental wave laser beam LA_{(w)} is rotated by 45 degrees by the half-wave plate 21 and introduced into the polarization beam splitter 22, whereby the p-mode and s-mode polarized beams are introduced into photo-detectors 23 and 24. Then, detected outputs from the photo-detectors 23 and 24 are supplied to a control signal generating circuit 25, from which a control signal which makes the detection levels equal is fed to an output terminal 26. This control signal is supplied from the output terminal 26 to a resonator length control apparatus which will be described below.

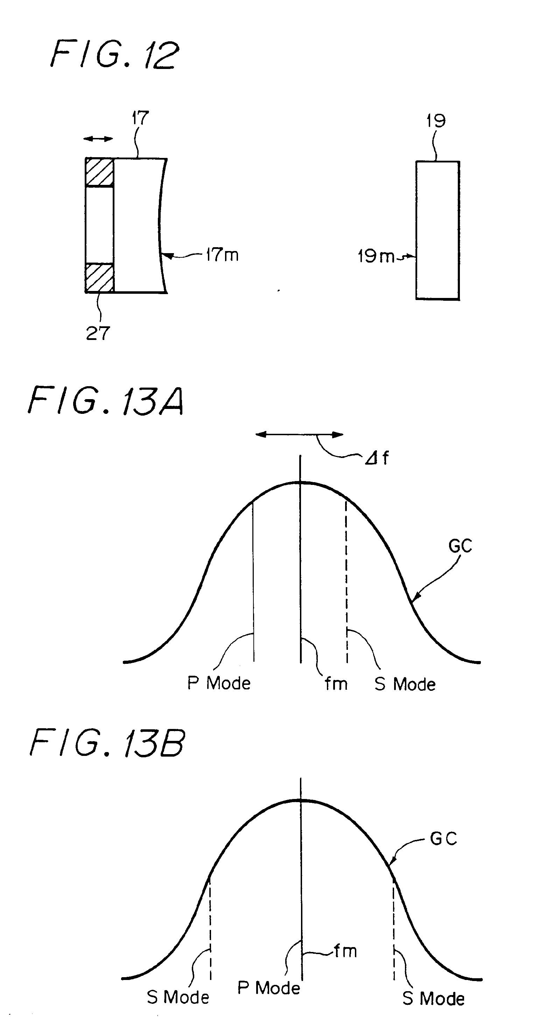

An example of a resonator length control apparatus will be described with reference to Figure 12. The resonator length control apparatus is adapted to control the optical path length between the mirror surface 17m of the concave mirror 17 and the mirror surface 19m of the plane mirror 19 of the resonator RS.

The resonator length control apparatus shown in Figure 12 is formed of a piezoelectric element 27 of annular configuration such as PZT (Pb-based Zirconate Titanates) bonded to the concave mirror 17 (the plane mirror 19 also may be used) at its side opposite to the mirror surface 17m. When supplied with a DC voltage based on the control signal, the resonator length control apparatus is energized to move the concave mirror 17 in the optical path length direction of the resonator RS. The resonator length is controlled in a range of from about 40 mm ± several micrometers.

Another example of the resonator length control apparatus will be described below.

Parts of the resonator are wholly or partly housed in a box whose temperature can be controlled. Then, the temperature within the box is changed by the control signal from the above control signal generating circuit 25, so that the optical path length between the mirror surface 17m of the concave mirror 17 and the mirror surface 19m of the plane mirror 19 in the resonator RS is controlled.

Still another example of the resonator length control apparatus will be described below. An electrooptical crystal having electrooptical effect is provided, for example, between the laser rod 4 and the nonlinear optical crystal element 6 within the resonator RS shown in Figure 11. The electrooptical crystal is applied with the DC voltage by the control signal from the above control signal generating circuit 25, whereby the optical path length between the mirror surface 17m of the concave mirror 17 and the mirror surface 19m of the plane mirror 19 in the resonator RS is controlled.

A further example of the resonator length control apparatus will be described next.

Pressure is applied to the quarter-wave plate 18, the laser rod or the nonlinear optical crystal element 6 forming the resonator RS in response to the control signal from the above control signal generating circuit to thereby control the optical path length between the mirror surface 17m of the concave mirror 17 and the mirror surface 19m of the plane mirror 19 in the resonator RS.

A yet further example of the resonator length control apparatus will be described below.

An optical element having a wedge is provided, for example, between the laser rod 4 and the nonlinear optical crystal element 6 within the resonator RS shown in Figure 11 and the optical element is moved in the lateral direction in response to the control signal from the above control signal generating circuit 25, thereby the optical path length between the mirror surface 17m of the concave mirror 17 and the mirror surface 19m of the plane mirror 19 in the resonator RS being controlled.

In short, as shown in Figure 13A, the optical path length between the mirror surface 17m of the concave mirror 17 and the mirror surface 19m of the plane mirror 19 in the resonator RS is controlled such that frequencies of p-mode and s-mode are allocated at frequency positions of fm ± Δf/2 relative to the maximum gain frequency fm of gain curve (frequency characteristic curve of gain) GC.

Further, as shown in Figure 13B, if the resonator length is deviated by 1/4 wavelength, the frequency of the p-mode (or s-mode) is allocated at the frequency position of the maximum gain frequency fm of the gain curve GC so that the mode competition occurs between the s-modes (or p-modes) of the respective sides. For this reason, the control range of the resonator length is preferably selected to be less than 1/4 wavelength of the fundamental wave laser beam.

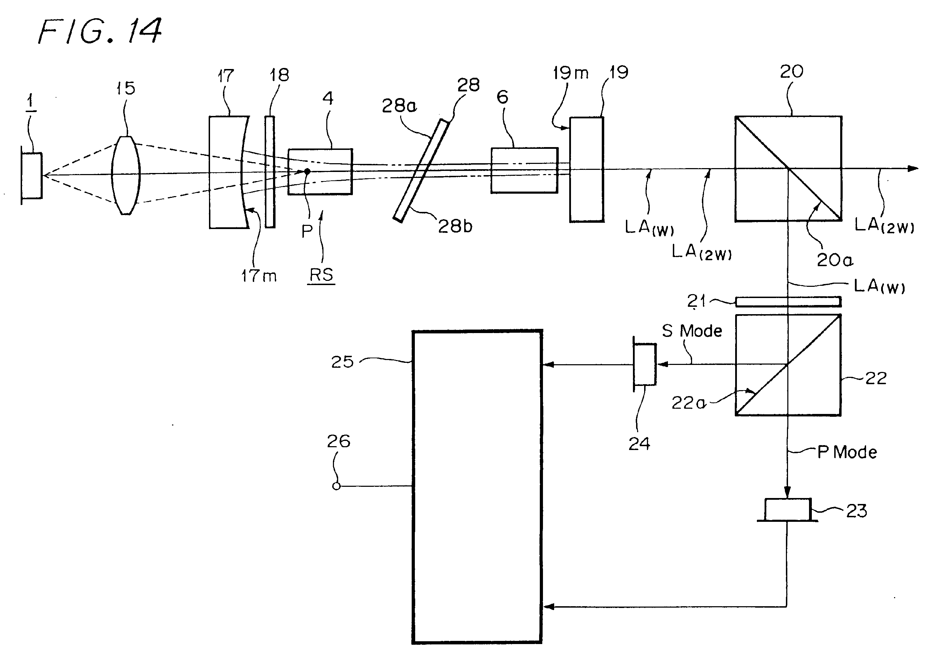

An apparatus for oscillating the polarized beams of the two modes of the fundamental wave laser beam of the resonator in the single longitudinal mode will be described with reference to Figure 14. In Figure 14, like parts corresponding to those of Figure 11 are marked with the same references and therefore need not be described in detail.

Referring to Figure 14, an etalon 28 is provided between the laser rod 4 and the nonlinear optical crystal element 6 of the resonator RS as an optical element having a wavelength selecting function. When the laser rod 4 is the Nd:YAG laser, the wavelength of the fundamental wave oscillation laser beam is 1064 nm and the gain frequency width is about 180 (GHz). The longitudinal mode frequency interval of Δf is expressed by the following equation:$\text{Δf = c/2L}$
where c is the speed of light and L is the resonator length (effective resonator length). In this case, if L is selected to be 40 mm, then the longitudinal mode frequency interval Δf will become 3.75 (GHz).

Since the quarter-wave plate 18 is provided within the resonator RS and the optical path difference of 1/4 wavelength exists between the p-mode and the s-mode, a frequency difference of Δf/2 occurs between the p-mode and the s-mode.

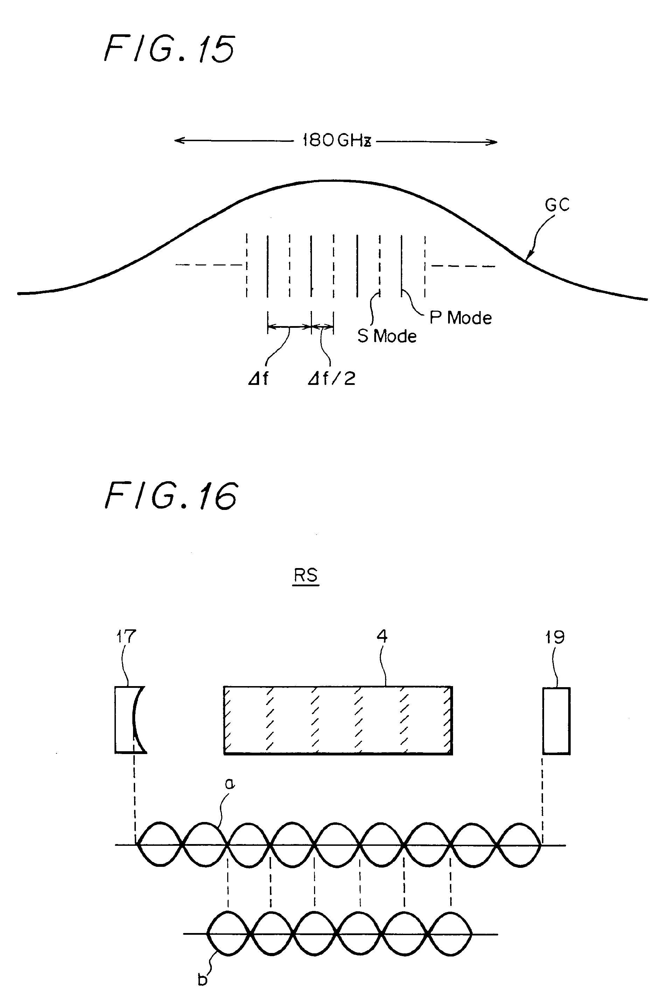

Figure 15 illustrates the relationships between the gain curve (frequency characteristics of gain) GC of the fundamental wave laser beam LA_{(w)} and frequencies of the p-mode and the s-mode when the laser rod 4 is the Nd:YAG laser.

When the relationships between the gain curve GC of the fundamental wave laser beam LA_{(w)} and the frequencies of the p-mode and the s-mode are as represented in Figure 15, if the laser apparatus is a homogeneous line broadening laser apparatus, the oscillation of the polarized beam closest to the peak of the gain will occur and the gain will be saturated. Therefore, it is supposed that the single mode oscillation will occur but in actual practice, a multi-mode oscillation occurs due to the hole-burning effect.

The hole-burning effect will be described with reference to Figure 16. As shown in Figure 16, in the case of a standing wave resonator, a standing wave a exists within the resonator RS and gain is not sufficiently saturated at the node portion of the standing wave a so that an oscillation of different mode occurs, that is, multi-mode oscillation occurs.

Accordingly, if the etalon 28 is interposed within the resonator RS as shown in Figure 14, then the multi-mode oscillation can be suppressed by the difference in wavelength dependent loss.

The etalon 28 is formed by coating a parallel flat plate having excellent flatness such as glass or crystal on its two surfaces with reflection films 28a and 28b, each being formed of a metal layer or dielectric multi-layer having a proper reflectivity.

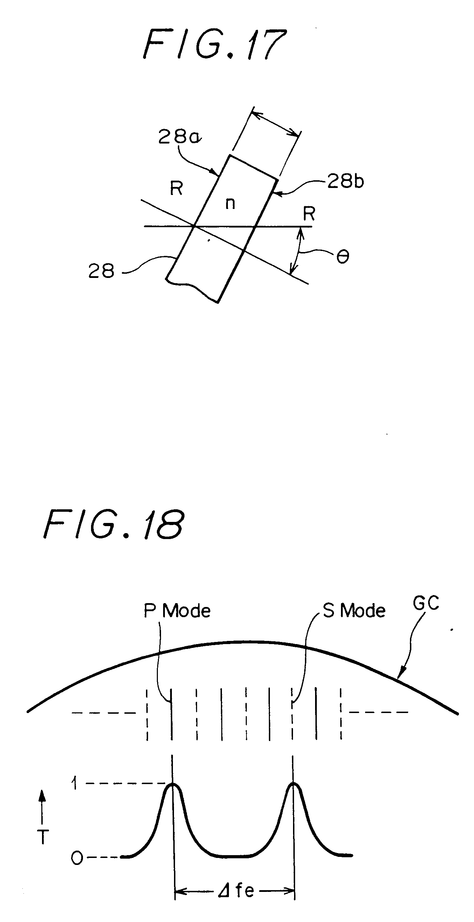

Assuming that R is the reflectivity of each of the reflection films 28a and 28b, d is the whole thickness, ϑ is the inclination of the normal relative to the optical path and n is the refractive index, then the transmissivity of the etalon 28 is expressed by the following equation:$\text{T = (1 - r)²/[(1 - R)² + 4Rsin²(δ/2)]}$
where δ is given by the following equation:$\text{δ = [4π n d cos ϑ)/λ}$
If δ is set to 2mπ (where m = 1,2,3,...), then the transmissivity T becomes 1 (see Figure 18). Further, a frequency interval Δfe in which the transmissivity T becomes 1 is expressed by the following equation:$\text{Δfe = c/2 n d cos ϑ}$
where c is the speed of light. Thus, if the frequency interval Δfe is selected as Δfe = (n = 1/2) Δf as shown in Figure 18, then the single mode oscillation of each of the p-mode and the s-mode becomes possible.

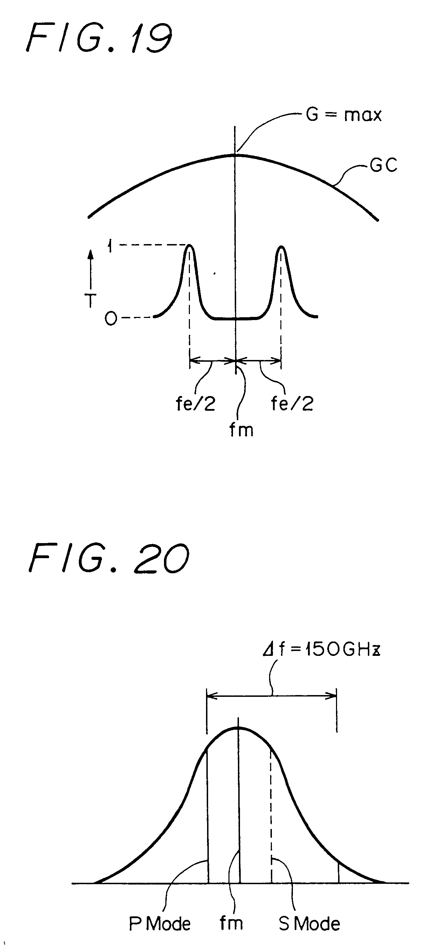

In order to balance the oscillations of the p-mode and the s-mode, it is preferable that, as shown in Figure 19 the peaks of the transmissivity T exist at the frequencies spaced by fe/2 from the respective sides of a frequency fm whose gain G becomes the maximum gain Gmax. If the thickness d of the etalon 28 is selected to be about 1mm, then the frequency interval Δfe becomes 150 (GHz), so that two oscillations being occur. Also, if the reflectivity R at respective surfaces of the etalon 28 is selected to be about 50%, the adjacent mode can be effectively suppressed.

Incidentally, the more the resonator length of the resonator RS is reduced, the wider the mode interval frequency Δf becomes. By way of example, if the resonator length is selected to be about 1 mm in the optical path length, then the mode interval frequency Δf becomes 150 (GHz) with the result that oscillations of only two modes will become possible relative to gain width of 180 (GHz) when the laser rod 4 is the Nd:YAG laser (see Figure 20). Accordingly, in such case, the p-mode oscillation and the s-mode oscillation can be balanced without providing the etalon 28 within the resonator RS.

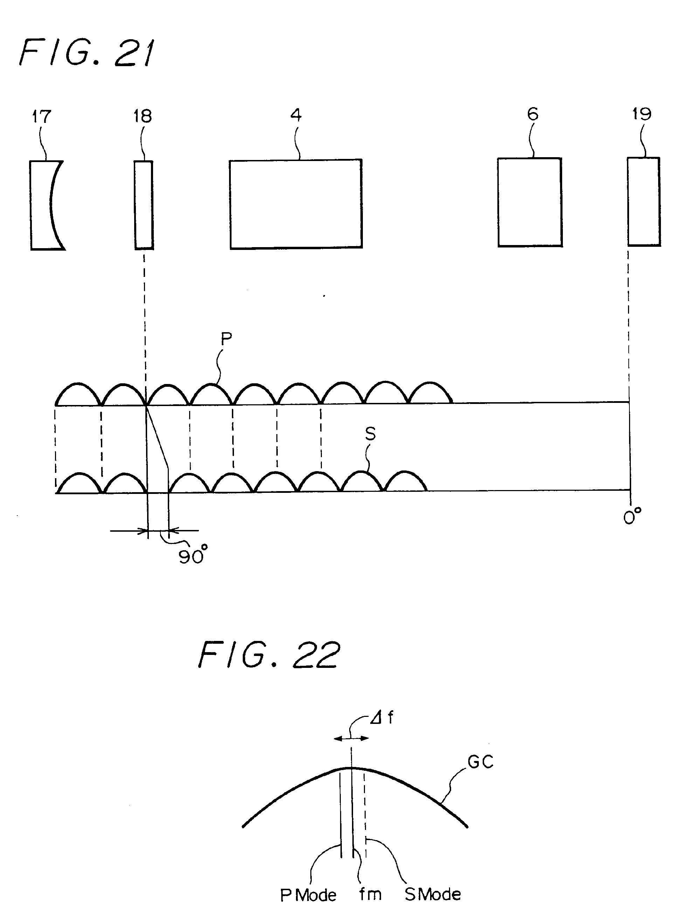

The quarter-wave plate 18 is provided between the concave mirror, 17 and the laser rod 4 in the resonator RSW as shown in Figure 11. In this case, if the birefringence produced in the nonlinear optical crystal element 6 is 0°, the intrinsic polarizations are located at the azimuthal angles at ± 45° and the phases thereof are displaced by 90° by the quarter-wave plate 18 (see Figure 21). This phase displacement is reduced to 0° if the nonlinear optical crystal element 6 is located closer to the plane mirror 19. In this case, if the laser rod 4 is located close to the quarter-wave plate 18, the phase difference of 90° between the p-mode oscillation and the s-mode oscillation causes the p-mode and s-mode to oscillate in the single mode, thus making it possible to remove the space hole-burning effect. Accordingly, in such case, if the etalon 28 is not provided within the resonator RS or if the mode frequency interval Δf of the resonator RS is not increased, then the double mode oscillation near the frequency at which the gain of the gain curve GC is maximized becomes possible (see Figure 22).

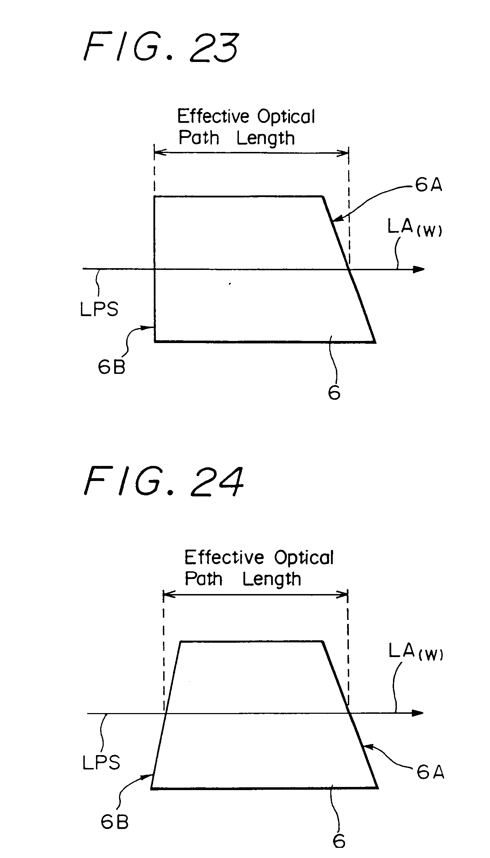

In order to make the birefringence of the nonlinear optical crystal element 6 become 0°, the nonlinear optical crystal element 6 is provided with a wedge as shown in Figure 23 or 24.

That is, as shown in Figures 23 and 24, the nonlinear optical crystal element 6 has its end face 6A opposite to the laser rod 4 inclined in a plane which is at a predetermined angle relative to an optical path LPS. Whereas, the other end face of the nonlinear optical crystal element 6 is formed perpendicular to the optical path LPS as shown in Figure 23 or inclined by a predetermined angle relative to the optical path LPS as shown in Figure 24.

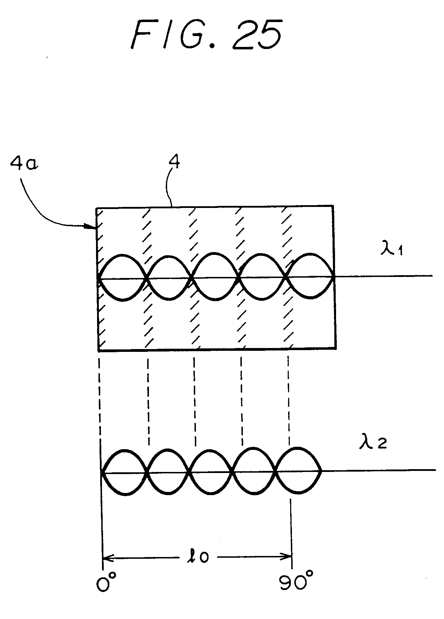

In another example which is useful for the understanding of the invention, in order to reduce the hole-burning effect, as shown in Figure 25, the laser rod (laser medium) 4 has on its end face opposing to the laser diode 1 a mirror surface 4a which is formed by coating with a metal layer, a dielectric multi-layer or like. This mirror surface 4a is used instead of the concave mirror 17 of Figure 11 and in this case, because the mirror surface 4a is the flat mirror surface, the plane mirror 19 is replaced with the concave mirror. If the mirror surface 4a is the concave mirror surface, the plane mirror 19 need not be replaced with the concave mirror. Since the mirror surface 4a is formed on one end face of the laser medium, the unsaturated gain portion does not make a contribution to any mode, so that multi-mode oscillation is suppressed.

The reason for this will be described below. In this case, as shown in Figure 25, let us consider a standing wave having mode wavelength λ₂ relative to a standing wave having a wavelength λ₁ within the laser rod 4. Also, let us assume that, after the node of the standing wave having the wavelength λ₂ coincides with the node of the standing wave having the wavelength λ₁ at the mirror surface 4a, the peak of the standing wave having the wavelength λ₂ becomes coincident with the node of the standing wave having the wavelength λ₁ at the position distant from the former position by the length ℓₒ. Accordingly, if the refractive index of the laser rod 4 is taken as n and m is taken as 1,2,3, ...., then the following two equations are established$\text{nℓ₀ = (λ₁/2)m}$$\text{nℓ₀ = (λ₂/2) (m + 1/2)}$
From the above two equations, Δλ(= λ₁ - λ₂) is modified as:${\text{Δf ≒ λ₁²/4nℓ}}_{\text{o}}$
On the basis of the above equation, if ℓₒ is selected to be nearly 0.5 mm (ℓₒ = 0.5mm) then Δλ becomes nearly 0.3 nm (Δλ ≒ 0.3nm). Accordingly, relative to the standing wave having the wavelength λ₁, the unsaturated gain portion does not contribute to the mode of the standing wave having the wavelength λ₂ in which Δλ is less than 0.3 nm (Δλ< 0.3nm) so that the standing wave having the wavelength λ₂ does not occur, that is, the multi-mode oscillation is suppressed.

With the solid state laser apparatus of the present invention as described above, since two polarization modes of the fundamental wave laser beam are respectively oscillated in the single longitudinal mode and the oscillation intensities of the two polarization modes of the fundamental wave laser beam become the same, the occurrence of the mode hopping noise caused by the mode coupling within the same polarization mode of the fundamental wave laser beam can be avoided and the stability of oscillation can be improved.

## Claims

1. A solid state laser apparatus in which, in use, a fundamental laser beam (LA(w)) generated in a laser medium (4) is resonated in a resonator so as to travel through a nonlinear optical crystal element (6) provided within said resonator (RS) thereby to generate a secondary harmonic laser light (LA(2w)) and in which first optical means (18) for suppressing a coupling caused by a sum-frequency generation between two polarization modes of said fundamental wave laser beam is provided within said resonator, comprising:
second optical means provided within said resonator for causing said two polarization modes of said fundamental wave laser beam to respectively oscillate in a single longitudinal mode; and
control means (25) for controlling the effective resonator length of said resonator such that said two polarization modes of said fundamental wave laser beam become the same in oscillation intensity.

2. A solid state laser apparatus according to claim 1, wherein said control means includes separating means (22) for separating one portion from said fundamental wave laser beam, detecting means (23,24) for detecting said one portion of said fundamental wave laser beam separated by said separating means, and resonator length control means (25,27) for controlling the effective resonator length of said resonator on the basis of the detected output from said detecting means.

3. A solid state laser apparatus according to claim 2, wherein a range in which said resonator is controlled by said resonator length control means is selected to be less than 1/4 of the fundamental wave.

4. A solid state laser apparatus according to claim 1, 2 or 3 wherein said second optical means is an optical element having a wavelength selecting property.

5. A solid state laser apparatus according to any one of claims 1 to 4, wherein said second optical element (28) is provided within the resonator between said laser medium (4) and said nonlinear optical crystal element (6).

## Patentansprüche

1. Festkörperlaservorrichtung, bei der im Betrieb ein in einem Lasermedium (4) erzeugter Grundwellen-Laserstrahl (LA(w)) in einem Resonator in Resonanz tritt, so daß er durch ein in dem Resonator (RS) angeordnetes nichtlineares optisches Kristallelement (6) wandert und dadurch einen der zweiten Harmonischen entsprechenden Laserstrahl (LA(2w)) erzeugt, wobei in dem Resonator ein erstes optisches Mittel (18) zur Unterdrückung einer durch Summenfrequenzbildung zwischen zwei Polarisationstypen des Grundwellen-Laserstrahls verursachten Kopplung vorgesehen ist,
mit einem in dem Resonator angeordneten zweiten optischen Mittel, welches veranlaßt, daß die genannten beiden Polarisationstypen des Grundwellen-Laserstrahls jeweils in einem einzigen longitudinalen Typ schwingen,
sowie mit einer Steuereinrichtung (25) zur Steuerung der effektiven Resonatorlänge des Resonators in der Weise, daß die genannten beiden Polarisationstypen des Grundwellen-Laserstrahls gleiche Schwingungsintensität annehmen.

2. Festkörperlaservorrichtung nach Anspruch 1, bei der die Steuereinrichtung Trennmittel (22) zum Abtrennen eines Anteils aus dem Grundwellen-Laserstrahl aufweist, ferner Detektormittel (23, 24) zum Detektieren des durch die Trennmittel abgetrennten einen Anteils des Grundwellen-Laserstrahls sowie Resonatorlängen-Steuermittel (25, 27) zur Steuerung der effektiven Resonatorlänge des Resonators auf der Basis des Detektorausgangssignals der Detektormittel.

3. Festkörperlaservorrichtung nach Anspruch 2, bei der der Bereich, in dem der Resonator mit Hilfe der Resonatorlängen-Steuermittel gesteuert wird, kleiner gewählt ist als 1/4 der Grundwelle.

4. Festkörperlaservorrichtung nach Anspruch 1, 2 oder 3, bei der das zweite optische Mittel ein wellenlängenselektives optisches Element ist.

5. Festkörperlaservorrichtung nach einem der Ansprüche 1 bis 4, bei der das zweite optische Element in dem Resonator zwischen dem Lasermedium (4) und dem nichtlinearen optischen Kristallelement (6) angeordnet ist.

## Revendications

1. Appareil de laser à l'état solide dans lequel, en utilisation, un faisceau laser fondamental (LA(w)) généré dans un milieu laser (4) est amené à résonner dans un résonateur de manière à se déplacer au travers d'un élément de cristal optique non linéaire (6) prévu à l'intérieur dudit résonateur (RS) pour ainsi générer une lumière laser d'harmonique d'ordre deux (LA(_{2w})) et dans lequel un premier moyen optique (18) permettant de supprimer un couplage provoqué par une génération de fréquence de somme entre deux modes de polarisation dudit faisceau laser d'onde fondamentale est prévu à l'intérieur dudit résonateur, comprenant :
un second moyen optique prévu dans ledit résonateur pour forcer lesdits deux modes de polarisation dudit faisceau laser d'onde fondamentale à osciller respectivement selon un unique mode longitudinal ; et
un moyen de commande (25) pour commander la longueur de résonateur efficace dudit résonateur de telle sorte que lesdits deux modes de polarisation dudit faisceau laser d'onde fondamentale présentent la même intensité d'oscillation.

2. Appareil de laser à l'état solide selon la revendication 1, dans lequel ledit moyen de commande inclut un moyen de séparation (22) permettant de séparer une partie dudit faisceau laser d'onde fondamentale, un moyen de détection (23, 24) pour détecter ladite une partie considérée dudit faisceau laser d'onde fondamentale séparée par ledit moyen de séparation et un moyen de commande de longueur de résonateur (25, 27) permettant de commander la longueur de résonateur efficace dudit résonateur sur la base de la sortie détectée provenant dudit moyen de détection.

3. Appareil de laser à l'état solide selon la revendication 2, dans lequel une plage dans laquelle ledit résonateur est commandé par ledit moyen de commande de longueur de résonateur est choisie de manière à être inférieure à 1/4 de la longueur d'onde.

4. Appareil de laser à l'état solide selon la revendication 1, 2 ou 3, dans lequel ledit second moyen optique est un élément optique présentant une propriété de sélection de longueur d'onde.

5. Appareil de laser à l'état solide selon l'une quelconque des revendications 1 à 4, dans lequel ledit second élément optique (28) est prévu dans le résonateur entre ledit milieu laser (4) et ledit élément de cristal optique non linéaire (6).
